# EUROPEAN PATENT SPECIFICATION

(11) **EP 1 360 852 B1**
(45) Date of publication and mention of the grant of the patent: **13.04.2005**
(21) Application number: 02779593.9
(22) Date of filing: 18.11.2002
(51) Int. Cl.: H04Q 7/22

(54) **PRIORITIZATION OF MMS MESSAGES**
VERGEBEN VON PRIORITÄTEN FÜR MMS-NACHRICHTEN
GESTION DE LA PRIORITE DE MESSAGES MMS

(30) Priority: 16.11.2001 FI 20012234; 16.11.2001 FI 20012232
(43) Date of publication of application: 12.11.2003
(73) Proprietor: TeliaSonera Finland Oyj, 00510 Helsinki (FI)
(72) Inventor: KORHONEN, Jouni, FIN-11100 Riihimäki (FI); JALKANEN, Tero, FIN-00710 Helsinki (FI)
(74) Representative: Virkkala, Jukka Antero
(86) International application number: PCT/FI2002/000916
(87) International publication number: WO 2003/043360

(56) References cited:
- WO-A1-01/33782
- WO-A1-98/48587

## Description

### BACKGROUND OF THE INVENTION

The invention relates to the prioritization of messages especially in an MMS, i.e. Multimedia Messaging Service, environment. MMS is a specification set for third-generation mobile services created by 3GPP (Third Generation Partnership Project, www.3gpp.org).

A multimedia messaging service is disclosed by WO 01/33782, for example.

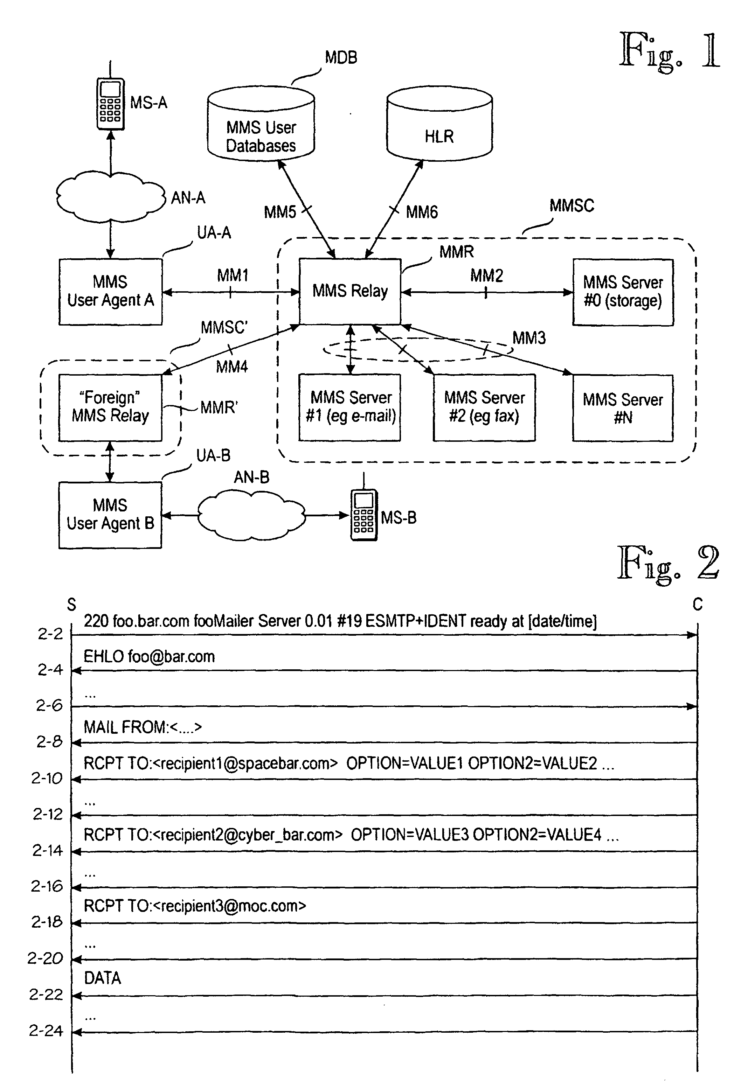

Figure 1 shows a reference architecture defined by 3GPP. One of its central elements is a multimedia service centre MMSC. According to the reference architecture, the multimedia service centre MMSC comprises a relay unit MMR (MMS Relay) and a group of servers. According to the established naming practice, server 0 is a storage server and the other servers 1 to N provide other services, such as e-mail, facsimile services, etc. Two databases, i.e. subscriber registers, namely MMS user database MDB and home location register HLR, are connected to the relay unit MMR. A first terminal (mobile station) MS-A, the subscriber information of which are stored in the subscriber registers of the MMSC in question, connects to MMSC through an access network AN-A and a first user agent UA-A. A mobile station MS-B in a visited network connects to MMSC through the corresponding elements AN-B, UA-B and MMR' of the visited network.

A problem with the arrangement described above is that the specification of MMS does not sufficiently cater for the need for prioritization of different messages. According to the prior art, the priority of an MMS message is included in the message. This creates the problem, for instance, that during broadcasting, the priority of the MMS message is the same for all recipients. In other words, the priority of an MMS message cannot be set separately for each recipient.

### BRIEF DESCRIPTION OF THE INVENTION

It is thus an object of the invention to develop a technique for solving the above-mentioned problem. An aspect of the invention relates to a method for transmitting a message from a first mobile station via a first multimedia service centre to a second mobile station. Another aspect of the invention relates to a multimedia service centre. The method and the multimedia service centre are characterized by what is stated in the attached independent method and apparatus claims, respectively. Preferred embodiments of the invention are disclosed in the dependent claims.

The invention is based on the idea that prior to sending the message, the sender and the service centre carry out a negotiation on the priority. The invention provides the advantage that it is possible to define a priority for each recipient separately in broadcasting. In addition, the prioritization is settled already during the negotiation (preferably: SMTP handshake), and the transmitting MMS relay/server can independently inform the receiving MMS relay/server concerning the priority of the message. The invention does not require big changes to the MMS infrastructure.

Due to the individual prioritization, different prices can be offered for different MMS messages. Each user can decide how inexpensive or expensive it is to transmit MMS messages, because the operator can price the priorities separately. The priorities can also be used to provide a fast service during emergencies, for instance, to certain specific groups regardless of the load in the MMS elements. The invention thus provides an MM4 interface an easy way of implementing different extensions regardless of the MMS standardization work, i.e. manufacturer-specific extensions can be introduced quickly and transparently.

According to a preferred embodiment of the invention, the MMS server/relay unit can advertise additional extensions during the negotiation.

According to another preferred embodiment of the invention, the first multimedia service centre and a second multimedia service centre carry out a second negotiation between them before transmitting the message from the first multimedia service centre to the second multimedia service centre. The second negotiation concerns the ability of the multimedia service centres to support MMS-specific extensions. A benefit of this embodiment is that when the message arrives, the multimedia service centres already know each other's ability to support MMS-specific extensions.

In the second negotiation the first and second multimedia service centres inform each other of the MMS-specific extensions they support. The negotiation process is in principle performed according to the SMTP protocol, but complementing the SMTP protocol with additional information fields, or options, required by the invention. In response to the received options, the MMS relay/server of the client, or sender, can check what MMS-specific extensions the MMS relay/server of the server, or recipient, supports in an MM4 interface. On the basis of this information, the MMS relay/server of the sender can use the correct options in transmitting the actual message. The MMS relay/server does not, however, need to support any MMS-specific extensions.

By utilizing the extension means of the basic protocol standardized by SMTP, operators providing MMS services and MMS interworking infrastructure providers (i.e. GRX operators) can easily create properties providing added MMS interworking value for their networks and servers. Based on the basic properties of SMTP, all servers also automatically provide a compatibility mode in which two MMS relays/servers can always use a non-extended SMTP.

The second negotiation process thus provides the MM4 interface an easy way of implementing different extensions regardless of the MMS standardization work, i.e. manufacturer-specific extensions can be introduced quickly and transparently.

Yet another embodiment of the invention relates to the evening out of load peaks of multimedia service centres. Load peaks can be evened out in such a manner that high-priority messages are transmitted as quickly as possible and/or using an optimum route, whereas low-priority messages wait and/or are transmitted along a slower (but less expensive) route, such as through the public Internet. This embodiment is based on the idea that when sending an MMS message (an MM1 interface between the terminal and MMSC, typically used on top of WAP transport layers), the user selects the priority of the message, and a high priority costs more than a low priority. High priority means that both the sender's and the recipient's MMSC processes the message as quickly as possible, whereas low-priority messages wait for a suitable time period when the load of MMSC is low. When transmitting MMS messages between operators (an MM4 interface between two MMSCs, SMTP typically used for the transmission of the message), high-priority messages are immediately directed to a dedicated connection (e.g. GRX) between the operators, whereas low-priority messages can be routed less urgently through another route by utilizing the public Internet, for instance. The messages can then also be processed in some other way, such as delay them till the night, if the connection has a very high load during the day.

The invention can be implemented as a multimedia messaging service centre, substantially according to the relevant specifications, supplemented with negotiation routines to carry out the negotiations according to the invention.

### BRIEF DESCRIPTION OF THE FIGURES

The invention will now be described in greater detail by means of preferred embodiments and with reference to the attached drawings, in which
Figure 1 shows the reference architecture of 3GPP,
Figure 2 shows by way of example a negotiation process for setting a priority,
Figure 3 is a signalling diagram illustrating the operation of the invention,
Figure 4 shows an embodiment of the invention, in which priority is utilized in selecting different routing alternatives,
Figure 5 is a signalling diagram illustrating the embodiment of Figure 4,
Figure 6 shows an example of the second negotiation process between two multimedia service centres, and
Figure 7 shows an alternative version of the second negotiation process, in which a similar functionality is built by defining it in 3GPP as an MMS relay/server property.

### DETAILED DESCRIPTION OF THE INVENTION

Figure 2 shows by way of example a negotiation process for setting a priority. S (server) refers to the server, such as one of the servers in the MMSC. C (client) refers to an SMTP client, such as another MMSC or a terminal, such as a mobile station. The embodiment shown in Figure 2 is based on the idea that parameters related to priority negotiation are transmitted in an "RCPT TO" command of SMTP (according to RFC2821 on which MMS is based). This embodiment is based on the observation that in the "RCPT TO" command it is possible to transmit parameter information that is not as such directly associated with the address of the recipient.

In step 2-2, the server S initiates an SMTP handshake to the client C. Step 2-4 is the client's initial contact (EHLO is a special version of HELO (=hello)). The client uses EHLO to signal that it supports SMTP extensions. In step 2-6, the SMTP handshake continues. The message in step 2-10 presents a first multimedia message recipient and states that certain options are to be used with this particular recipient. Similarly, the message in step 2-14 presents a second multimedia message recipient and states that certain options are to be used with this particular recipient. The message in step 2-18 presents a third multimedia message recipient. No options are necessary in message forwarding towards this recipient.

The messages per se are known from SMTP (Simple Mail Transfer Protocol). Messages 2-22 is the actual data message from the client C. In the negotiation shown in Figure 2, the parameters defining the priority are transmitted in messages 2-10 and 2-14. The parameters can be as follows, for instance:
- Option:: Receiver-Priority
- Value:: Low, Medium, Normal, High and Emergency

During the initial SMTP negotiation, the MMS SMTP relay/server indicates that it can perform a priority negotiation in connection with a "RCPT TO" command. Example:
S: 220 foo.bar.com fooMailer Server 0.01 #19 ESMTP+IDENT ready at Fri, 9 Nov 2001 12:21:53 +0200
C: EHLO troma.etela.sonera.fi
S: 250-foo.bar.com Hello troma.etela.sonera.fi
S: 250 MMS-RECEIVER-PRIORITY -> advertisement of MMS priority extension
S: 250....

If the "RCPT TO" with RECEIVER-PRIORITY transmitted by the client is faulty, the MMS relay/server responds to it with a standard SMTP error message that indicates an invalid SMTP command.

According to a second preferred embodiment of the invention, the MMS server/relay unit can advertise any additional extensions it provides during the SMTP negotiation. Example:
C: EHLO troma.etela.sonera.fi
S: 250-foo.bar.com Hello troma.etela.sonera.fi
S: 250 MMS-RECEIVER-EXT1 -> advertisement of MMS priority extension
S: 250....

Below is a list of one set of extensions (MMS-RECEIVER-EXT1). The extensions are indicated to the receiving MMS relay/server.

| | |
|---|---|
| OPTION | VALUE(S)/VALUE RANGE |
| SENDING-TIME | DATE (as per RFC2822) |
| RETRY-COUNT | Integer (0-n) |
| EXPIRY DATE | DATE |
| EARLIEST SEND | DATE |
| ARCHIEVE | YES/NO |
| FORMAT CHANGE | E.g. TIFF->GIF |
| SECURITY | E.g. WTLS Class3 REQUIRED |
| REPLY-CHARGING | SUPPORTED/NOT SUPPORTED |
| CAPABILITY NEGOTIATION | E.g. MPEG4, AMR |

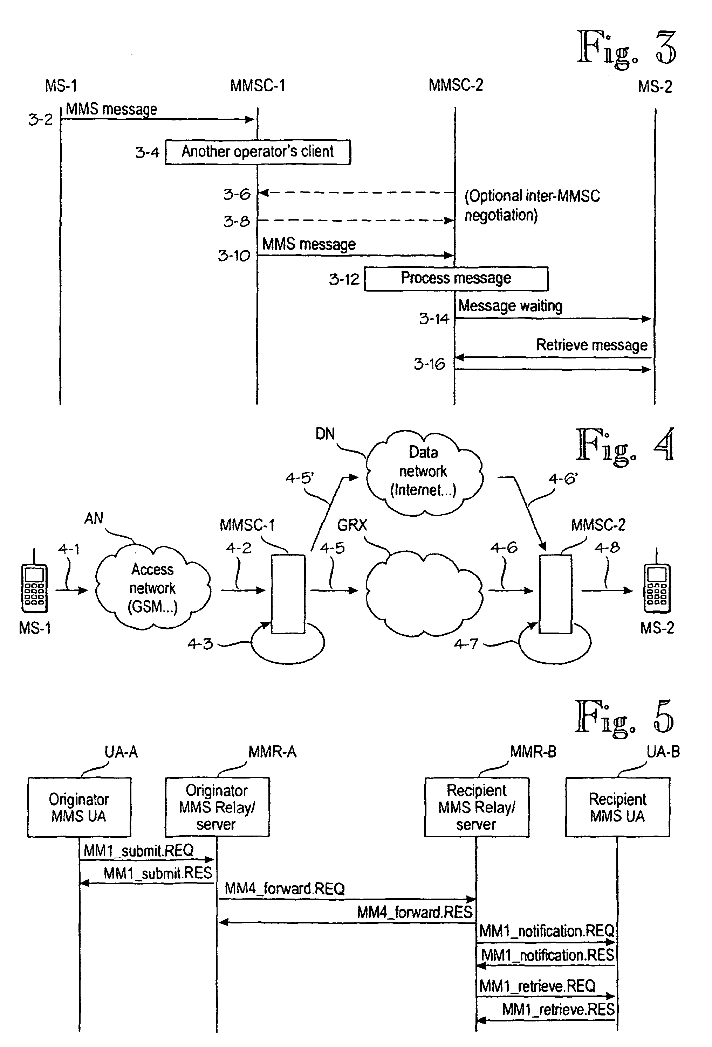

Figure 3 is a signalling diagram illustrating the operation of the invention. In step 3-2, the user of mobile station MS-1 sends an MMS message over the MM1 interface. In step 3-4, MMSC-1 receives the message and detects that the client is a client of another operator.

Steps 3-6 and 3-8, which are depicted by dashed lines, relate to a preferred embodiment of the invention, in which a separate negotiation takes place between the first and the second multimedia service centres MMSC-1 and MMSC-2. In step 3-6, MMSC-1 finds the address of MMSC-2 and begins a negotiation, such as an SMTP-handshaking, with MMSC-2. In step 2-8, MMSC-2 returns the handshake and indicates the MMS extensions it has.

In step 3-10, MMSC1 transmits the message over the MM4 interface to MMSC2 by utilizing SMTP and the additional options used with the "RCPT TO" command. In step 3-12, MMSC2 receives the message and accepts it and possibly utilizes the additional options received from MMSC1 when processing the received MMS message. In step 3-14, MMSC2 informs the user of mobile station MS-2 of the received message. In step 3-16, the user of mobile station MS-2 retrieves the message from MMSC2 over the MM 1 interface.

Figure 4 shows an embodiment of the invention, in which priority is utilized in selecting different routing alternatives. The operation of this embodiment is described in the following. The access network AN used by terminal MS is a GSM network in this example, but any type of network supporting MMS messages can be used. In step 4-1, a mobile station MS-1 transmits an MMS message. The priority of the message is set on the basis of the negotiation described above. The priority set by negotiation can also be by-passed in a message for instance by using a menu displayed by the user interface of the mobile station. In step 4-2, the MMS message arrives through the GSM network at MMSC1 of the user's home network over the MM1 interface. In step 4-3, MMSC1 processes the message according to its priority. Low-priority messages are set to wait until the MMSC load is sufficiently low. If the MMS message is addressed to a client of another operator, the message is transmitted to MMSC2. As shown by arrows 4-5 and 4-6, high-priority messages are routed optimally via an inter-operator core network GRX (that corresponds to the MM4 interface of Figure 1) to MMSC2. As shown by arrows 4-5' and 4-6', low-priority messages may be directed to wait for rerouting via a data network, such as the public Internet. In step 4-7, MMSC2 processes the MMS message according to its priority. In step 4-8, a notification of the message is transmitted to the recipient who then retrieves the message from MMSC2 over the MM1 interface.

Figure 5 is a signalling diagram illustrating the embodiment shown in Figure 4. The MMS message is transmitted from the terminal to MMSC by using the abstract message structure "MM1_submit.REQ". One field in this message structure is "Message class" that can be utilized to transmit the priority of the message from one end to another by using the existing structure.

Information elements of MM1_submit.REQ:

| Information element | Presence | Description |
|---|---|---|
| ... | ... | ... |
| Sender address | Optional | The address of the MM originator. |
| *Message class* | Optional | *The class of MM (e.g., personal, advertisement, information service)* |
| Date and time | Optional | The time and date of the submission of MM (time stamp). |
| ... | ... | ... |

The Message class field is also carried with other message structures (e.g. MM4_forward.REQ).

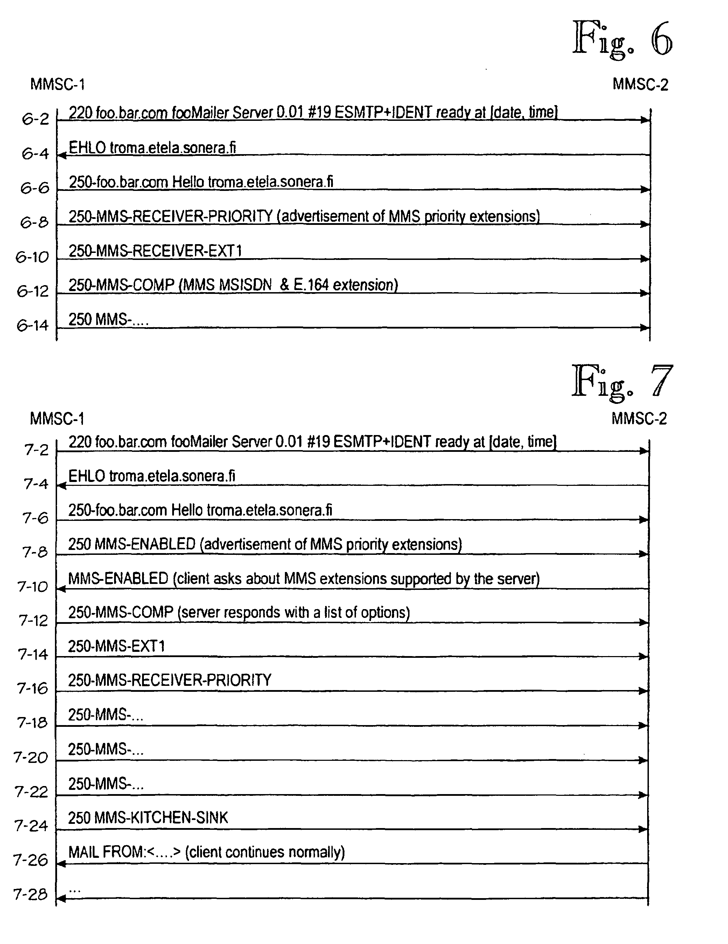

Figure 6 shows in more detail an example of the second negotiation process between two multimedia service centres MMSC-1 and MMSC-2. This negotiation relates to steps 3-6 through 3-10 in Figure 3. As regards the present invention, the most interesting steps are steps 6-8 through 6-14, in which MMSC-1 advertises, i.e. indicates, the extensions supported by it. In this example, in step 6-8, MMSC-1 indicates extensions that relate to priority processing, i.e. a technique by which different priorities can be set for different messages. Correspondingly in step 6-10, MMSC-1 indicates any other available extensions. In step 6-12, MMSC-1 indicates additional services related to numbering, such as various number change services, etc.

Figure 7 shows an alternative version of the second negotiation process, in which a similar functionality is built by defining it in 3GPP as an MMS relay/server property. (The first MMSC acts as the server, the second MMSC acts as the client.) All MMS-specific properties are added under one extension advertised by SMTP under the name of 'MMS-ENABLED', for instance. The MMS client server must then execute one extra, extended command added to the standard (according to the method SMTP allows) so that the client server would see the entire list of the supported MMS extensions. From the response of the MMS server, the MMS client server sees whether there is a usable option among the MMS-specific options. The servers that are not interested in the MMS-specific extensions need then not go through the (possibly long) list of all options. Similarly, the MMS client server notices immediately whether the receiving server at all supports the MMS-specific properties.

The above describes the embodiments of the invention, in which the invention is used for transmitting MMS messages between operators by using SMTP (RFC2821) in the MM4 interface (interworking interface). The invention defines a method for prioritizing MMS messages recipient-specifically during an SMTP negotiation. Using the prioritization, the transport network system/MMS relay units handling MMS interworking can make decisions concerning the transport order, queue management, etc. of messages. It is apparent to a person skilled in the art that the invention is not restricted to the embodiments described above, but while the technology advances, the basic idea of the invention can be implemented in many different ways. The invention and its embodiments are thus not restricted to the examples described above, but can vary within the scope of the claims.

### Acronyms (some are not official)

3GPP: Third Generation Partnership Project
GRX: GPRS Roaming Exchange
HLR: home location register
MDB: MMS user database
MM 1 - MM4: MMS interfaces
MMR: MMS Relay
MMS: Multimedia Messaging Service
MMSC: multimedia service centre
RCPT TO: add address to list of recipient addresses
SMTP: Simple Mail Transfer Protocol
UA: user agent
WAP: Wireless Application Protocol

## Claims

1. A method for transmitting a message (2-22) from a first mobile station (MS-1) via a first multimedia service centre (MMSC, MMSC', MMSC-1, MMSC-2) to several second mobile stations (MS-2), **characterized by**
carrying out a negotiation (2-4 ... 2-20) between the first mobile station and the first multimedia service centre before transmitting the message from the first mobile station to the first multimedia service centre;
wherein the negotiation concerns the priority of the message for each of the several second mobile stations;
whereby when the message arrives, the multimedia service centre already knows the priority of the message.

2. A method according to claim 1, **characterized by**
carrying out a second negotiation (3-6 ... 3-8; 6-8 ... 6-12) between the first multimedia service centre (MMSC-1) and a second multimedia service centre (MMSC-2), before transmitting the message from the first multimedia service centre to the second multimedia service centre;
wherein the second negotiation concerns the ability of the multimedia service centres to support MMS-specific extensions;
whereby when the message arrives, the multimedia service centres already know each other's ability to support MMS-specific extensions.

3. A method according to claim 1 or 2, **characterized by** overriding the priority set by negotiation with another priority that is transmitted with the message.

4. A method according to any one of the preceding claims, **characterized in that** the priority affects the selection of the route (4-5, 4-5') between two multimedia service centres (MMSC-1, MMSC-2).

5. A method according to any one of the preceding claims, **characterized by** setting the priority utilizing fields added to an "RCPT TO" command according to MMS specifications.

6. A method according to any one of the preceding claims, **characterized by** transmitting the priority in a "MESSAGE CLASS" field according to MMS specifications.

7. A multimedia service centre (MMSC) arranged to transmit messages from a first mobile station to several second mobile stations, **characterized by** negotiation routine means for carrying out a negotiation (2-4 ... 2-20) between the first mobile station and the multimedia service centre before transmitting the message from the first mobile station to the first multimedia service centre, wherein the negotiation concems the priority of the message for each of the several second mobile stations.

8. A multimedia service centre (MMSC) according to claim 7, **characterized by** second negotiation routine means for carrying out a second negotiation between a first multimedia service centre (MMSC-1) and a second multimedia service centre (MMSC-2), before transmitting the message from the first multimedia service centre to the second multimedia service centre, wherein the negotiation concerns the ability of the multimedia service centres to support MMS-specific extensions.

## Patentansprüche

1. Verfahren zur Übertragung einer Nachricht (2-22) von einer ersten Mobilstation (MS-1) über ein erstes Multimedia Messaging Service Center (MMSC, MMSC', MMSC-1, MMSC-2) zu einer Mehrzahl von zweiten Mobilstationen (MS-2), ***dadurch gekennzeichnet, dass***
- eine Verhandlung (2-4...2-20) zwischen der ersten Mobilstation und dem ersten Multimedia Messaging Service Center durchgeführt wird, bevor die Nachricht von der ersten Mobilstation zu dem ersten Multimedia Messaging Service Center übertragen wird; *wobei*
- die Verhandlung die Priorität der Nachricht für jede der Mehrzahl von zweiten Mobilstationen betrifft; *wodurch*
- dem Multimedia Messaging Service Center die Priorität der Nachricht bereits bekannt ist, wenn die Nachricht eintrifft.

2. Verfahren nach Anspruch 1, ***dadurch gekennzeichnet, dass***
- eine zweite Verhandlung (3-6...3-8; 6-8...6-12) zwischen dem ersten Multimedia Messaging Service Center (MMSC-1) und einem zweiten Multimedia Messaging Service Center (MMSC-2) durchgeführt wird, bevor die Nachricht von dem ersten Multimedia Messaging Service Center zu dem zweiten Multimedia Messaging Service Center übertragen wird; *wobei*
- die zweite Verhandlung das Vermögen der Multimedia Messaging Service Center betrifft, MMS-spezifische Erweiterungen zu unterstützen; *wodurch*
- den Multimedia Messaging Service Centern das gegenseitige Vermögen, MMS-spezifische Erweiterungen zu unterstützen, bereits bekannt ist, wenn die Nachricht eintrifft.

3. Verfahren nach Anspruch 1 oder 2, ***dadurch gekenn*zeichnet, *dass*** die durch die Verhandlung festgelegte Priorität mit einer anderen mit der Nachricht übertragenen Priorität aufgehoben wird.

4. Verfahren nach einem der vorhergehenden Ansprüche, ***dadurch gekennzeichnet, dass*** die Priorität die Wahl der Route (4-5, 4-5') zwischen zwei Multimedia Messaging Service Centern (MMSC-1, MMSC-2) beeinflusst.

5. Verfahren nach einem der vorhergehenden Ansprüche, ***dadurch gekennzeichnet, dass*** die einem "RCPT TO-" Befehl beigefügten Prioritäts-nutzenden Felder gemäß dem MMS-Standard festgelegt werden.

6. Verfahren nach einem der vorhergehenden Ansprüche, ***dadurch gekennzeichnet, dass*** die Priorität in einem "Message Class-" Feld gemäß dem MMS-Standard übertragen wird.

7. Multimedia Messaging Service Center (MMSC), das vorgesehen ist, um Nachrichten von einer ersten Mobilstation zu einer Mehrzahl von zweiten Mobilstationen zu übertragen, ***gekennzeichnet durch*** eine Verhandlungsroutineeinrichtung, die eine Verhandlung (2-4...2-20) zwischen der ersten Mobilstation und dem Multimedia Messaging Service Center durchführt, bevor die Nachricht von der ersten Mobilstation zu dem ersten Multimedia Messaging Service Center übertragen wird, wobei die Verhandlung die Priorität der Nachricht für jede der Mehrzahl von zweiten Mobilstationen betrifft.

8. Multimedia Messaging Service Center (MMSC) nach Anspruch 7, ***gekennzeichnet durch*** eine zweite Verhandlungsroutineeinrichtung, die eine zweite Verhandlung zwischen einem ersten Multimedia Messaging Service Center (MMSC-1) und einem zweiten Multimedia Messaging Service Center (MMSC-2) durchführt, bevor die Nachricht von dem ersten Multimedia Messaging Service Center zu dem zweiten Multimedia Messaging Service Center übertragen wird, wobei die Verhandlung das Vermögen der Multimedia Messaging Service Center betrifft, MMS-spezifische Erweiterungen zu unterstützen.

## Revendications

1. Procédé pour transmettre un message (2-22) d'une première station mobile (MS-1), par l'intermédiaire d'un premier centre de service multimédia (MMSC, MMSC', MMSC-1, MMSC-2), à plusieurs deuxièmes stations mobiles (MS-2), **caractérisé par**
l'exécution d'une négociation (2-4 ... 2-20) entre la première station mobile et le premier centre de service multimédia avant la transmission du message de la première station mobile au premier centre de service multimédia ;
dans lequel la négociation concerne la priorité du message pour chacune de la pluralité de deuxièmes stations mobiles ;
moyennant quoi, lorsque le message arrive, le centre de service multimédia connaît déjà la priorité du message.

2. Procédé selon la revendication 1, **caractérisé par**
l'exécution d'une deuxième négociation (3-6 ... 3-8 ; 6-8 ... 6-12) entre le premier centre de service multimédia (MMSC-1) et un deuxième centre de service multimédia (MMSC-2) avant la transmission du message du premier centre de service multimédia au deuxième centre de service multimédia ;
dans lequel la deuxième négociation concerne la capacité des centres de service multimédia à prendre en charge des extensions spécifiques aux MMS ;
moyennant quoi, lorsque le message arrive, les centres de service multimédia connaissent déjà la capacité de chacun pour prendre en charge des extensions spécifiques aux MMS.

3. Procédé selon la revendication 1 ou 2, **caractérisé par** le remplacement de la priorité définie par négociation par une autre priorité qui est transmise avec le message.

4. Procédé selon l'une quelconque des revendications précédentes, **caractérisé en ce que** la priorité affecte la sélection de la voie d'acheminement (4-5, 4-5') entre deux centres de service multimédia (MMSC-1, MMSC-2).

5. Procédé selon l'une quelconque des revendications précédentes, **caractérisé par** la détermination de la priorité en utilisant des champs ajoutés à une commande « RCPT TO » conformément aux spécifications MMS.

6. Procédé selon l'une quelconque des revendications précédentes, **caractérisé par** la transmission de la priorité dans un champ « MESSAGE CLASS » conformément aux spécifications MMS.

7. Centre de service multimédia (MMSC) agencé pour transmettre des messages d'une première station mobile à plusieurs deuxièmes stations mobiles, **caractérisé par** des moyens formant sous-programme de négociation pour exécuter une négociation (2-4 ... 2-20) entre la première station mobile et le centre de service multimédia avant la transmission du message de la première station mobile au premier centre de service multimédia, dans lequel la négociation concerne la priorité du message pour chacune de la pluralité de deuxièmes stations mobiles.

8. Centre de service multimédia (MMSC) selon la revendication 7, **caractérisé par** des deuxièmes moyens formant sous-programme de négociation pour exécuter une deuxième négociation entre un premier centre de service multimédia (MMSC-1) et un deuxième centre de service multimédia (MMSC-2) avant la transmission du message du premier centre de service multimédia au deuxième centre de service multimédia, dans lequel la négociation concerne la capacité des centres de service multimédia à prendre en charge des extensions spécifiques aux MMS.
